# EUROPÄISCHE PATENTSCHRIFT

(11) **EP 1 174 696 B1**
(45) Veröffentlichungstag und Bekanntmachung des Hinweises auf die Patenterteilung: **28.03.2012**
(21) Anmeldenummer: 01117373.9
(22) Anmeldetag: 18.07.2001
(51) Int. Cl.: G01L 9/00, G01L 19/04

(54) **Druckmesszelle mit Temperatursensor**
Pressure measurement cell with temperature sensor
Cellule de mesure de pression avec capteur de température

(30) Priorität: 20.07.2000 DE 10035346
(43) Veröffentlichungstag der Anmeldung: 23.01.2002
(73) Patentinhaber: VEGA Grieshaber KG, 77709 Wolfach (DE)
(72) Erfinder: Jacob, Jörn, 77709 Wolfach-Kirnbach (DE); Böhler, Ewald, 77709 Wolfach (DE); Liehr, Manfred, 77709 Wolfach (DE)
(74) Vertreter: Patentanwälte Westphal, Mussgnug & Partner

(56) Entgegenhaltungen:
- EP-A- 0 764 839
- EP-A2- 0 635 707
- DE-A- 3 817 336
- DE-A- 4 011 901
- DE-A1- 3 912 280
- DE-A1- 4 142 141
- JP-A- 11 094 667
- US-A- 5 510 895

## Beschreibung

Die vorliegende Erfindung betrifft eine kapazitive Druckmesszelle mit den Merkmalen des Oberbegriffs des Anspruchs 1.

Eine solche Druckmesszelle ist z. B. aus DE 4 011 901 A1 bekannt. Dort ist zwischen einem Grundkörper und einer Membran der Druckmesszelle ein Glasring angeordnet. Im Bereich des Glasrings ist eine ringförmige, an der der Membran zugewandten Stirnseite des Grundkörpers angeordnete Widerstandsbahn zur Temperaturkompensation platziert. In einem Ausführungsbeispiel weist die Kapazität der Druckmesszelle eine zentrale Elektrode und eine diese umgebende ringförmige Elektrode am Grundkörper und eine gegenüberliegende Elektrode auf der Membran auf. Die Widerstandsbahn und die Elektroden sind mit insgesamt fünf Anschlussleitungen, die durch den Grundkörper geführt wird, kontaktiert.

Bei einer Druckmesszelle mit einem Grundkörper und einer an dem Grundkörper angeordneten, durch einen zu messenden Druck verformbaren Membran den Temperatursensor zwischen der Membran und dem Grundkörper anzuordnen gewährleistet einen geringen Abstand zwischen dem Temperatursensor und dem Medium, das den Druck auf die Membran ausübt, so daß der Meßwert des Temperatursensors Temperaturänderungen dieses Mediums schnell zu folgen vermag. Der störende Einfluß von abrupten Temperaturänderungen des Mediums auf die Druckmessung wird dadurch erheblich reduziert.

Die vorliegende Erfindung hat das Ziel die bekannte kapazitive Druckmesszelle zu vereinfachen, bei gleichzeitiger Gewährleitung einer hohen Dichtheit der Druckmesszelle.

Dieses Ziel wird im Wesentlichen durch zwei Merkmale erreicht:
- das Widerstandselement (5) ist in die Materialschicht (4) durch Verglasung eingebettet,
- Durch den Grundkörper (1) sind als Anschlussleitungen insgesamt vier Durchkontaktierungen (9) geführt, wovon zwei der Durchkontaktierungen (9) zwei Enden des Widerstandselementes (5), die dritte Durchkontaktierung (9) die zentralen Elektroden (6) und die vierte Durchkontaktierung (9) die Ringelektrode (7) mit Anschlussfeldern (10) auf der Rückseite des Grundkörpers verbindet.

Im Gegensatz zur vorbekannten Druckmesszelle ist es folglich nicht mehr notwendig die Gegenelektrode zu kontaktieren. Es kann dadurch nicht nur eine fünfte Anschlussleitung bzw. Durchkontaktierung zur Gegenelektrode entfallen. Diese fünfte Anschlussleitung braucht auch nicht durch einen Glasring geführt werden.

Weiterbildungen der Erfindung sind Gegenstand der Unteransprüche.

Ein typischer Abstand zwischen dem Temperatursensor und einer dem zu messenden Druck ausgesetzten Außenfläche der Membran kann je nach Dicke der Membran, d.h. je nach Dimensionierung der Druckmesszelle bzw. der durch sie zu messenden Drucke, zwischen 0,1 und 3 mm betragen.

Zweckmäßigerweise umfaßt der Temperatursensor ein Widerstandselement mit temperaturabhängigem Widerstand. Ein solches Widerstandselement kann auf einfache Weise flächig erzeugt werden.

Um ein möglichst großes und rauscharmes Temperaturmeßsignal zu erhalten, ist es erfindungsgemäß vorgesehen, daß das Widerstandselement sich über im wesentlichen den gesamten Umfang der Meßzelle erstreckt. Ein Nebeneffekt dieser Anordnung des Widerstandselements ist, daß der aus dem Widerstandswert des Widerstandselements bestimmbare Temperaturwert einen Mittelwert über im wesentlichen den gesamten Umfang der Membran darstellt und somit einen Mittelwert über die gesamte Fläche der Membran sehr nahe kommt. Um auf einer gegebenen Umfangslänge der Dichtung eine große Leiterlänge des Widerstandselements unterzubringen, ist das Widerstandselement vorzugsweise mäanderartig ausgebildet.

Weitere Merkmale und Vorteile der Erfindung ergeben sich aus der nachfolgenden Beschreibung eines Ausführungsbeispiels mit Bezug auf die beigefügten Zeichnungen. Es zeigen:

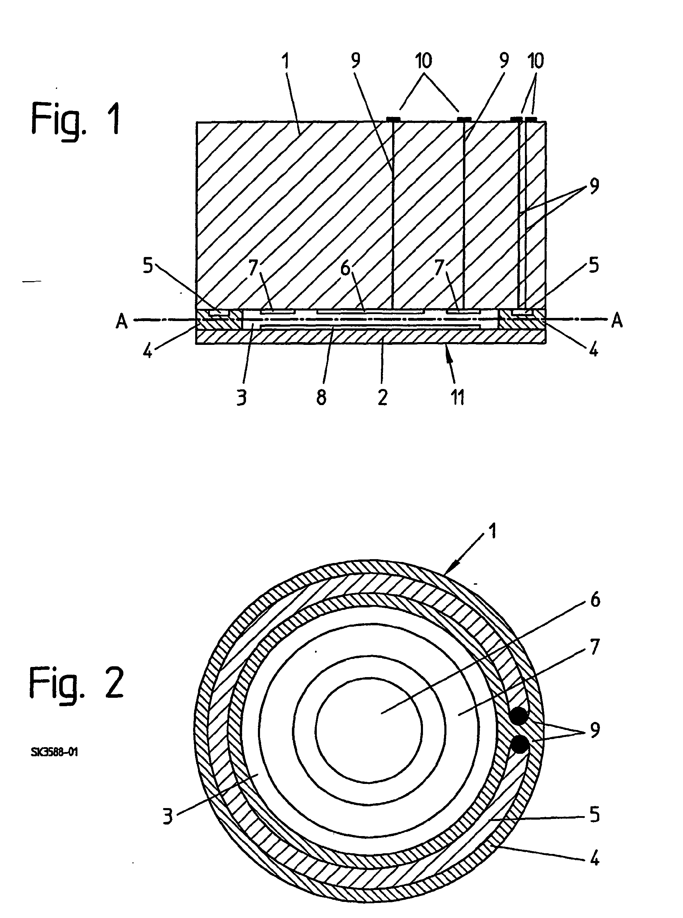

Figur 1 eine erfindungsgemäße Druckmesszelle in einem axialen Schnitt;

Figuren bis 4 jeweils Schnitte durch die Druckmesszelle der Figur 1 entlang der Ebene A-A.

Figur 1 zeigt die erfindungsgemäße Druckmesszelle in einem ersten Schnitt. Die Druckmesszelle umfaßt einen im wesentlichen zylindrischen Grundkörper 1 und eine Membran 2, jeweils aus einem Keramikmaterial, die durch eine sich ringförmig entlang der Ränder der einander zugewandten Stirnseiten von Grundkörper 1 und Membran 2 erstreckende Materialschicht 4 beabstandet gehalten sind. Die Materialschicht 4 besteht aus einem Glaswerkstoff. Sie umschließt gemeinsam mit dem Grundkörper 1 und der Membran 2 dicht eine flachzylindrische Kammer 3. Der Grundkörper 1 trägt im Bereich der Kammer 3 an seiner Stirnfläche eine zentral angeordnete Elektrode 6 und eine sich konzentrisch dazu erstreckende Ringelektrode 7. Durchkontaktierungen 9 verbinden die zwei Elektroden mit Anschlußfeldern 10 an der Rückseite des Grundkörpers 1. An der gegenüberliegenden Seite der Kammer 3 trägt die Membran 2 eine Gegenelektrode 4, die nicht kontaktiert ist. Die Membran 2 ist durch den Druck eines auf ihre Außenfläche 11 wirkenden Mediums verformbar. Die Verformung der Membran verändert die Kapazität des von den Elektroden 6, 7, 8 gebildeten Kondensators, so daß durch Messen dieser Kapazität, beispielsweise durch Einbau der Druckmesszelle als Kondensator in einem Schwingkreis und Messen von dessen Resonanzfrequenz, auf den auf die Außenfläche 11 wirkenden Druck geschlossen werden kann.

In die als Dichtung für die Kammer 3 fungierende Materialschicht 4 ist ein Widerstandselement 5 mit temperaturabhängigem Widerstandswert eingebettet. Zwei entgegengesetzte Enden des langgestreckten Widerstandselements 5 sind über Durchkontaktierungen 9 mit Anschlußfeldern 10 an der Rückseite des Grundkörpers 1 verbunden.

Bei dem in Figur 1 gezeigten Ausführungsbeispiel befindet sich das Widerstandselement 5 in direktem Kontakt mit der Oberfläche des Grundkörpers 1 und ist von der Membran 2 durch einen Teil der Materialschicht 4 getrennt. Die direkte Anbringung des Widerstandselements 5 auf dem Grundkörper 1 erleichtert die Herstellung einer elektrischen Verbindung zwischen dem Widerstandselement und der Umgebung über die Durchkontaktierungen 9. Die vom Grundkörper 1 abgewandte Oberfläche des Widerstandselements 5 bildet eine große Wärmeaustauschfläche mit der Materialschicht 4 und über diese mit der Membran 2 und dem (nicht dargestellten) Medium, das den zu messenden Druck auf die Membran 2 ausübt.

Die Druckmesszelle kann auf einfache Weise hergestellt werden, indem auf dem Grundkörper 1 zunächst in einer Dickschicht- oder Dünnschichttechnik das temperaturabhängige Widerstandselement 5 ausgebildet wird, auf diesem dann ein Vorläufermaterial für die Materialschicht 4 aufgetragen und auf dem Vorläufermaterial die Membran 2 angeordnet wird. Durch Erhitzen und Verglasen des Vorläufermaterials kommt die dadurch gebildete glasartige Materialschicht 4 in einen innigen Kontakt mit dem Grundkörper 1 und dem Widerstandselement 5 einerseits und der Membran 2 andererseits, was zum einen die Dichtigkeit der Kammer 2 gegen das Medium, dessen Druck gemessen werden soll, gewährleistet, und zum anderen einen hocheffizienten Wärmeaustausch von der mit dem Medium in Kontakt befindlichen Membran 2 über die Materialschicht 4 mit dem Widerstandselement 5 ermöglicht.

Je nach vorgesehenem Meßbereich der Druckmesszelle bzw. der erforderlichen Festigkeit der Membran 2 beträgt der Abstand zwischen der Außenfläche 11 der Membran und dem Widerstandselement 5 typischerweise 0,1 bis 3, vorzugsweise 0,2 bis 2 mm.

Die Figuren 2 bis 4 zeigen jeweils anhand von Schnitten entlang der Ebene A-A von Figur 1 unterschiedliche Ausgestaltungen des als Temperatursensor fungierenden temperaturabhängigen Widerstandselements 5. Man erkennt in Figur 2 in der Draufsicht die Zentralelektrode 6 und die Ringelektrode 7 des Grundkörpers 1 sowie konzentrisch dazu am Rand des Grundkörpers 1 angeordnet, die Materialschicht 4. Im Innern der Materialschicht 4 verläuft das temperaturabhängige Widerstandselement 5 über fast den gesamten Umfang des Grundkörpers 1, mit Ausnahme des Abstandes zwischen den zwei Durchkontaktierungen 9, die zur Versorgung des Widerstandselements 5 mit einem Meßstrom dienen.

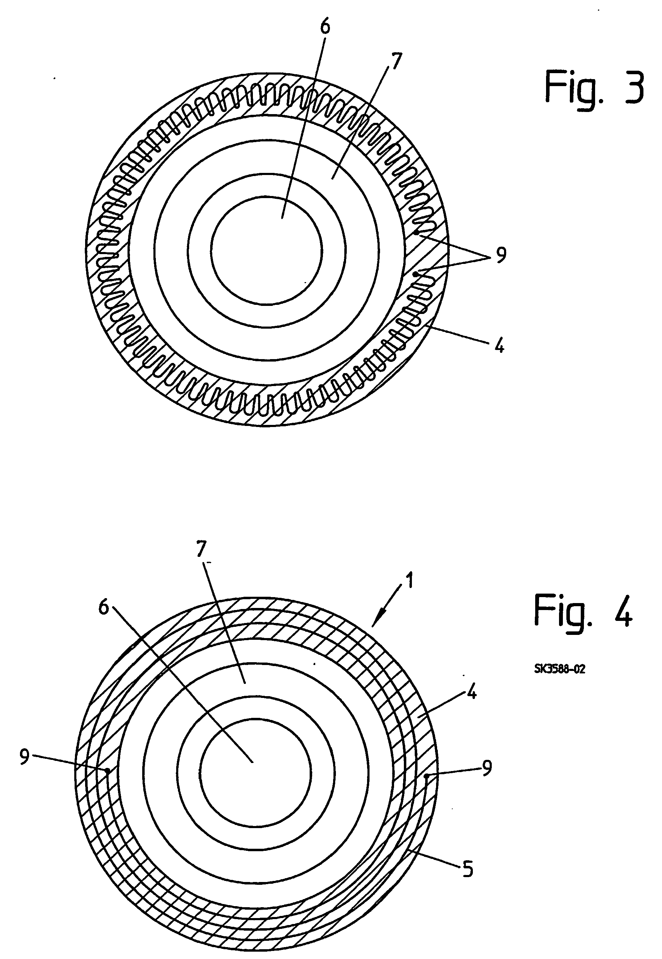

Bei der in Figur 3 dargestellten Ausgestaltung der Druckmesszelle verläuft das temperaturabhängige Widerstandselement 5 auf einem mäanderartigen oder zickzackförmigen Weg um im wesentlichen den gesamten Umfang des Grundkörpers 1 von einer der zwei Durchkontaktierungen 9 zur anderen. Diese Ausgestaltung erlaubt es, ein Widerstandselement 5 unterzubringen, dessen ausgestreckte Länge wesentlich größer ist als die Umfangslänge des Grundkörpers, das einen hohen Widerstandswert und eine dementsprechend starke Änderung des Widerstandswertes mit der Temperatur aufweist.

Bei der Ausgestaltung der Figur 4 verläuft das temperaturabhängige Widerstandselement 5 auf einem spiralartigen Weg innerhalb der Materialschicht 4. Auch bei dieser Anordnung kann die ausgestreckte Länge des Widerstandselements 5 ein Vielfaches der Umfangslänge des Grundkörpers 1 erreichen. Die Besonderheit dieser Ausgestaltung ist, daß sie eine weitgehend willkürliche Positionierung der Durchkontaktierungen 9 am Grundkörper 1 zuläßt, z.B. an diametral gegenüberliegenden Positionen wie in Figur 4 gezeigt, weil die Länge, die das Widerstandselement 5 erreichen kann, hier nicht proportional zum Winkelabstand der zwei Durchkontaktierungen 9 ist.

Das hier beschriebene Prinzip ist selbstverständlich nicht auf eine Druckmesszelle vom kapazitiven Typ, wie in den Figuren dargestellt, beschränkt. Es ist auch auf eine DMS-Meßzelle bzw. allgemein auf jeden Typ von Druckmesszelle übertragbar, die einen Grundkörper und eine von diesem beabstandete, durch den zu messenden Druck verformbare Membran aufweist.

## Patentansprüche

1. Kapazitive Druckmesszelle mit
- einem Grundkörper (1),
- einer an dem Grundkörper (1) angeordneten, durch einen zu messenden Druck verformbaren Membran (2),
- einer ringförmig entlang der Ränder der einander zugewandten Stirnseiten von Grundkörper (1) und Membran (2) erstreckenden Materialschicht (4 aus einem Glas, durch welche der Grundkörper (1) und die Membran (2) beabstandet gehalten sind und eine Kammer (3) gebildet ist,
- einer auf der der Membran (2) zugewandten Stirnseite des Grundkörpers (1) zentral angeordneten Elektrode (6) und einer sich konzentrisch auf der gleichen Stirnseite dazu erstreckenden Ringelektrode (7)
- einer auf der gegenüberliegenden Seite der Kammer (3) von der Membran (2) getragenen Gegenelektrode (8)
- einem Widerstandselement (5) als Temperatursensor, wobei sich das Widerstandselement (5) im Bereich der Materialschicht (4) aus Glas in direktem Kontakt mit der der Membran (2) zugewandten Stirnseite des Grundkörpers (1) befindet und sich über im wesentlichen den gesamten Umfang der Materialschicht (4) aus Glas erstreckt,
- eine vielzahl von Anschlußleitungen, die durch den Grundkörper (1) geführt sind, wobei:
- das Widerstandselement (5) in die Materialschicht (4) durch Verglasung eingebettet ist,
- durch den Grundkörper (1) als Anschlussleitungen insgesamt vier Durchkontaktierungen (9) geführt sind, wovon zwei der Durchkontaktierungen (9) zwei Enden des Widerstandselementes (5), die dritte Durchkontaktierung (9) die zentralen Elektrode (6) und die vierte Durchkontaktierung (9) die Ringelektrode (7) mit Anschlussfeldern (10) auf der Rückseite des Grundkörpers verbindet.

2. Kapazitive Druckmesszelle nach anspruch 1, daadurch **gekennzeichnet**, dass die Gegenelektrode (8) nicht kontaktiert ist.

3. Kapazitive Druckmesszelle nach Anspruch 1 oder 2, **dadurch gekennzeichnet, dass** der Abstand zwischen dem Temperatursensor und einer dem zu messenden Druck ausgesetzten Außenfläche (11) der Membran (2) zwischen 0,1 und 3 mm beträgt.

4. Kapazitive Druckmesszelle nach Anspruch 1, 2 oder 3, **dadurch gekennzeichnet, dass** der Grundkörper (1) und/oder die Membran (2) aus einem Keramikmaterial gebildet sind.

5. Kapazitive Druckmesszelle nach einem der Ansprüche 1 bis 4, **dadurch gekennzeichnet, dass** das Widerstandselement (5) mäanderartig verläuft.

## Claims

1. A capacitive pressure measurement cell with
- a base member (1),
- a diaphragm (2) arranged on the base member (1) and capable of being deformed by a pressure to be measured,
- a layer of material (4) consisting of a glass which extends in an annular manner along the edges of the mutually facing front ends of the base member (1) and the diaphragm (2) and by which the base member (1) and the diaphragm (2) are kept at a distance and a chamber (3) is formed,
- an electrode (6) arranged centrally on the front end of the base member (1) facing the diaphragm (2) and an annular electrode (7) extending concentrically to it on the same front end,
- a counter electrode (8) carried by the diaphragm (2) on the opposite side of the chamber (3),
- a resistor element (5) as a temperature sensor, wherein the resistor element (5) is situated in the region of the layer of material (4) consisting of glass in direct contact with the front end of the base member (1) facing the diaphragm (2) and extends over substantially the entire periphery of the layer of material (4) consisting of glass,
- a plurality of connecting lines which are led through the base member (1), wherein
- the resistor element (5) is embedded in the layer of material (4) by glazing,
- the base member (1) has passing through it as connecting lines altogether four plated through-holes (9), of which two of the plated through-holes (9) connect two ends of the resistor element (5), the third plated through-hole (9) connects the central electrode (6) and the fourth plated through-hole (9) connects the annular electrode (7) to connector panels (10) on the rear side of the base member.

2. A capacitive pressure measurement cell according to claim 1, **characterized in that** the counter electrode (8) is not contacted.

3. A capacitive pressure measurement cell according to claim 1 or 2, **characterized in that** the distance between the temperature sensor and an outer face (11) of the diaphragm (2) subjected to the pressure to be measured amounts to between 0.1 and 3 mm.

4. A capacitive pressure measurement cell according to claim 1, 2 or 3, **characterized in that** the base member (1) and/or the diaphragm (2) are formed from a ceramic material.

5. A capacitive pressure measurement cell according to any one of claims 1 to 4, **characterized in that** the resistor element (5) extends in a meander pattern.

## Revendications

1. Cellule de mesure capacitive de pression comprenant :
- un corps de base (1),
- une membrane (2) installée sur le corps de base (1) et déformable par la pression à mesurer,
- une couche de matière (4), de forme annulaire le long des bords des faces frontales tournées l'une vers l'autre du corps de base (1) et de la membrane (2), cette couche étant en un verre et elle maintient écarté le corps de base (1) et la membrane (2) en formant une chambre (3),
- une électrode (6) installée en position centrale sur la face frontale du corps de base (1) en regard de la membrane (2) et une électrode annulaire (7) concentrique à celle-ci et sur la même face frontale,
- une contre-électrode (8) portée par la membrane (2) sur le côté opposé à la chambre (3),
- un élément résistant (5) comme capteur de température,
* l'élément résistant (5) se trouvant dans la zone de la couche de matière (4) en verre, en contact direct avec la face frontale du corps de base (1) tournée vers la membrane (2) et s'étendant pratiquement sur toute la périphérie de la couche de matière (4) en verre,
- un ensemble de lignes de branchement traversant le corps de base (1),
* l'élément résistant (5) étant intégré par électrification dans la couche de matière (4),
- quatre contacts traversant (9) passant globalement à travers le corps de base (1) comme lignes de branchement, dont deux contacts traversants (9) reliant deux extrémités de l'élément résistant (5), le troisième contact traversant (9) reliant l'électrode centrale (6) et le quatrième contact traversant (9) reliant l'électrode annulaire (7) aux zones de branchement (10) au dos du corps de base.

2. Cellule capacitive de mesure de pression selon la revendication 1, **caractérisée en ce que**
la contre-électrode (8) n'est pas en contact.

3. Cellule capacitive de mesure de pression selon la revendication 1 ou 2,
**caractérisée en ce que**
la distance entre le capteur de température et l'une des surfaces extérieures (11) de la membrane (2), exposée à la pression à mesurer, est comprise entre 0,1 et 3 mm.

4. Cellule capacitive de mesure de pression selon les revendications 1, 2 ou 3,
**caractérisée en ce que**
le corps de base (1) et/ou la membrane (2) sont en une matière céramique.

5. Cellule capacitive de mesure de pression selon les revendications 1 à 4,
**caractérisée en ce que**
l'élément résistant (5) a une forme de méandres.
